# EUROPEAN PATENT SPECIFICATION

(11) **EP 2 250 106 B1**
(45) Date of publication and mention of the grant of the patent: **16.11.2011**
(21) Application number: 09709145.8
(22) Date of filing: 04.02.2009
(51) Int. Cl.: B65G 1/04, B65G 1/137, B66F 9/14

(54) **LOADING AND UNLOADING DEVICE FOR A TRANSLATOR-ELEVATOR APPARATUS**
LADE- UND ENTLADEVORRICHTUNG FÜR EINE TRANSLATIONS-HUB-PLATTFORMVORRICHTUNG
DISPOSITIF DE CHARGEMENT ET DE DÉCHARGEMENT DESTINÉ À UN APPAREIL ÉLÉVATEUR À TRANSLATION

(30) Priority: 04.02.2008 IT MO20080036
(43) Date of publication of application: 17.11.2010
(73) Proprietor: S.i.t.i. Di Basso S.r.l., 30036 Santa Maria di Sala (VE) (IT)
(72) Inventor: BASSO, Michele, I-31030 Castelcucco (TV) (IT)
(74) Representative: Crugnola, Pietro
(86) International application number: PCT/IB2009/000198
(87) International publication number: WO 2009/098573

(56) References cited:
- EP-A- 0 733 563
- EP-A- 0 907 143
- EP-A- 1 035 046
- EP-A- 1 693 317
- EP-A- 1 764 317
- EP-A- 1 772 400
- WO-A-03/019425
- WO-A-2006/095047
- CA-A1- 2 147 888
- DE-A1- 4 233 688
- DE-A1- 19 744 339
- DE-A1- 19 941 640
- DE-A1-102005 029 398
- DE-U1- 20 303 376
- JP-A- 6 018 590

## Description

The present invention relates to a loading and unloading device for a translator-elevator apparatus, i.e. a device that is suitable for loading objects on shelving, removing the objects from a carriage of a translator-elevator apparatus, and unloading objects from said shelving to arrange the objects on said carriage of the translator-elevator apparatus.

A translator-elevator apparatus is a machine used in automatic warehouses for removing or depositing objects to be stored on shelves of shelving of the warehouse.

The aforesaid warehouses comprise shelving provided with shelves onto which objects to be stored can be placed and from which the stored objects can be removed. Between the shelving aisles are provided in which the translator-elevator apparatus is arranged. This apparatus comprises a lift truck that is movable along said aisles on which are placed the objects to be placed on the shelving or the objects removed from the shelving.

The shelving is formed of a series of shelves, for example made of sheet or comb-shaped.

The loading and unloading device is installed on said lift truck and performs the loading and unloading function on said shelves of packages and parcels packed with cardboard, heat-shrinkable film or other suitable packaging materials.

From IT 1310573 a loading and unloading device is known for a translator-elevator apparatus that comprises a thrusting element suitable for being actuated selectively for pushing each object to be moved from a lift truck to a storage shelf and vice versa. The thrusting element comprises a horizontal bar that is movable between a rest position in which it does not interfere with the objects to be moved and an operating position in which it interferes with the objects to be moved. The aforesaid bar has a length that is substantially the same as the width of each shelf of the storage shelving.

The device disclosed in IT 1310573 has some drawbacks. It is above all suitable for removing from a shelf of the storage shelving all the objects stored thereupon, not being able to select an object or a group of objects from those on the shelf, as the bar that constitutes the thrusting element has a width that is equal to the width of the shelf. Further, said device is not able to place an object on top of a stack of objects or to remove an object from a stack because the thrusting element can only push or drag objects on a shelf.

EP 0733563 discloses a loading and unloading device according to the preamble of claim 1. This device is associable with a translator-elevator apparatus for transferring objects onto shelving of a warehouse, or removing therefrom, said loading and unloading device being suitable for moving between said shelving or onto said shelving, said loading and unloading device being provided with a first shelf and a second shelf suitable for supporting said objects, said first shelf and said second shelf (208b) being distanced from one another an movable with respect to one another, wherein said loading and unloading device comprises a pair of telescopic arms associated with said first shelf and said second shelf, said telescopic arms being movable with respect to one another in a direction that is substantially parallel to said fixed shelf (208), for varying the distance between centres of said telescopic arms and the distance between said first shell and said second shelf, a couple of telescopic bars being non-removably fixed to said telescopic arms.

EP 1772400 discloses a loading and unloading device for transferring objects onto shelving of a warehouse, or removing therefrom, said loading and unloading device being suitable for moving between said shelving or onto said shelving, said loading and unloading device being provided with a fixed shelf suitable for supporting said objects, wherein said loading and unloading device comprises a pair of telescopic arms associated with said fixed shelf , one of said telescopic arms being movable with respect to other telescopic arm in a direction that is substantially parallel to said fixed shelf, for varying the distance between centres of said telescopic arms.

WO 03/01 9425 discloses a loading and unloading device for transferring objects onto shelves of a warehouse, or removing therefrom, said loading and unloading device being suitable for moving between said shelves or onto said shelves, said loading and unloading device being provided with a fixed shelf, suitable for supporting said objects, wherein said loading and unloading device comprises a pair of telescopic arms associated with said fixed shelf, said telescopic arms being movable with respect to one another telescopic arm in a direction that is substantially parallel to said fixed shelf, for varying the distance between centres of said telescopic arms (59).

DE 10 2005 029398 discloses a loading and unloading conveyor comprising a load receiving table for receiving objects. The table is provided with telescopic arms which can be adjusted to fit different object cross sections.

DE 203 03 376 U1 discloses a loading and unloading device for transferring objects onto shelves of a warehouse, or removing therefrom, said loading and unloading device being suitable for moving between said shelves or onto said shelves, said loading and unloading device being provided with a fixed shelf suitable for supporting said objects; said loading and unloading device comprises a pair of telescopic arms associated with said fixed shelf, sad telescopic arms being fixed to sides of the fixed shelf so that the distance between them can not be modified.

EP 1693317 discloses a loading and unloading device for transferring objects onto shelves of a warehouse, or removing therefrom, said loading and unloading device being suitable for moving between said shelves or onto said shelves, said loading and unloading device being provided with a fixed shelf suitable for supporting said objects; said loading and unloading device comprises a pair of telescopic arms associated with said fixed shelf, said telescopic arms being movable with respect to one another in a direction that is substantially parallel to said fixed shelf, for varying the distance between centres of said telescopic arms.

The present invention aims to provide a loading and unloading device that is usable in a translator-elevator apparatus, that has maximum flexibility of use, i.e. that enables single objects or groups of objects to be placed on or removed from a shelf of a warehouse shelving and further enables a single object to be placed on a stack of objects or enables an object to be removed from a stack of objects.

According to the present invention a loading and unloading device is provided with the technical features of claim 1.

The telescopic arms that are movable with respect to one another enable single objects or groups of objects to be handled to place or remove the single objects or groups of objects on or from the shelving of the warehouse, apart from the dimensions thereof, and further enable the single objects to be removed from a stack of objects or to be placed thereupon, thus ensuring maximum flexibility of use of the loading and unloading device.

The invention will be disclosed below merely by way of nonlimiting example, with reference to the attached drawings, in which:
Figure 1 is a schematic perspective view of a translator-elevator apparatus provided with a loading and unloading device according to the invention;
Figure 2 is a bottom perspective view of a loading and unloading device according to the invention;
Figure 3 is an enlarged detail of Figure 2;
Figure 4 is a top perspective view of the loading and unloading device in Figure 1;
Figure 5 is an operating diagram of the loading and unloading device according to the invention in the case of removal of an object from a stack of objects, or of deposition of an object on a stack of objects;
Figure 6 is a perspective view of the loading and unloading device according to the invention in the operating configuration relating to the diagram in Figure 5;
Figure 7 is an operating diagram of the loading and unloading device according to the invention in the case of removal of a group of objects located on a shelf of shelving of a warehouse, or of transfer of a group of objects onto said shelf;
Figure 8 is a perspective view of the loading and unloading device according to the invention in the operating configuration relating to the diagram in Figure 7;
Figure 9 is an operating diagram of the loading and unloading device according to the invention in the case of removal of a single object, or of a stack of objects, from a shelf of shelving of a warehouse, or of transfer of a single object, or a stack of objects onto said shelf;
Figure 10 is a perspective view of the loading and unloading device in the operating configuration relating to the diagram in Figure 9;
Figure 11 is a view from the right of the loading and unloading device in Figure 1 in which the moving means of the movable shelves of the device are shown;
Figure 12 is a view from the left of the loading and unloading device of Figure 1 in which the moving means of the movable shelves of the device are shown;
Figure 13 is a view like that in Figure 11, in which the moving means of the supports of the telescopic bars are shown;
Figure 14 is a schematic perspective view of a translator-elevator apparatus provided with a loading and unloading device according to a version of the present invention;
Figure 15 is a perspective view of the loading and unloading device of the translator-elevator apparatus in Figure 14;
Figure 16 illustrates a first version of the loading and unloading device of Figures 14 and 15;
Figure 17 illustrates a second version of the loading and unloading device of Figures 14 and 15;
Figure 18 illustrates a third version of the loading and unloading device of Figures 14 and 15;
Figure 19 is a schematic layout of a storage plant for storing objects.

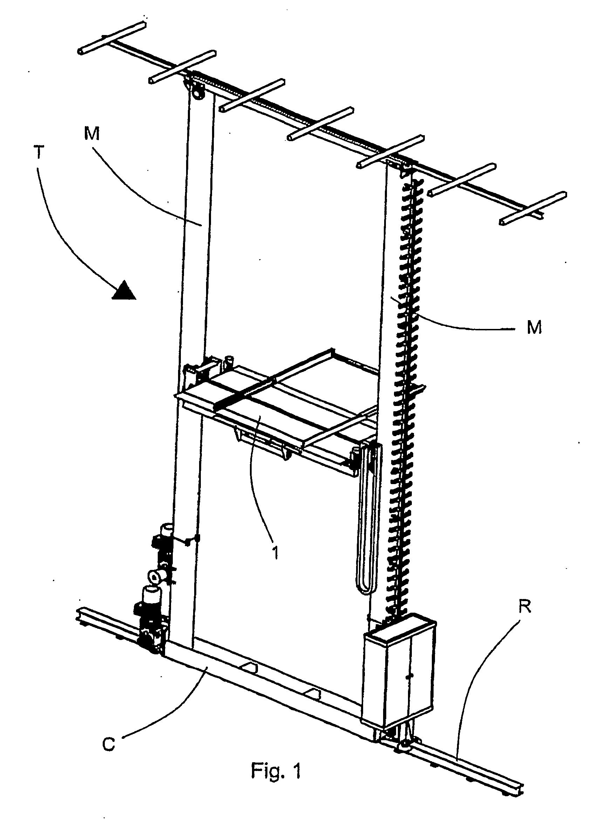

In Figure 1 there is schematically illustrated a translator-elevator apparatus T provided with a loading and unloading device 1 according to the invention.

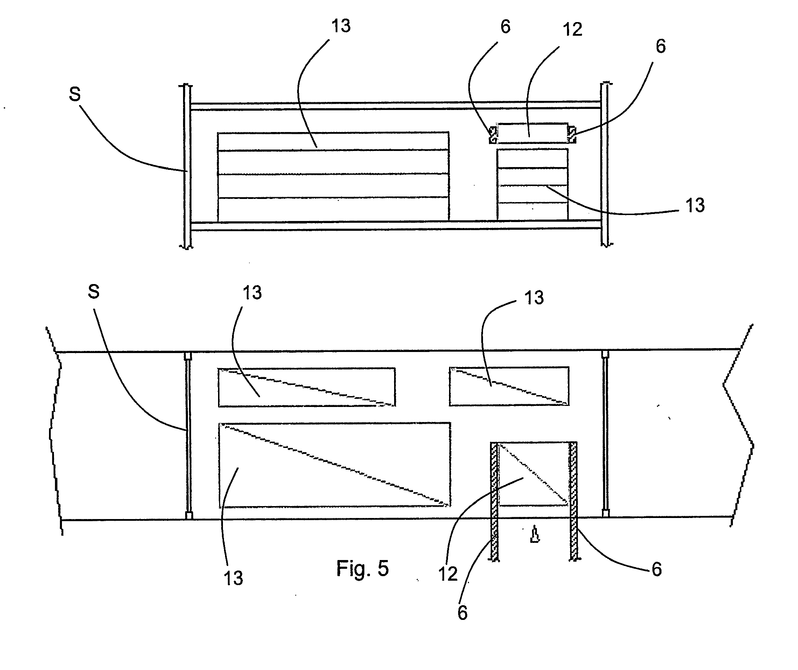

The translator-elevator apparatus T comprises a loading and unloading device 1 that is movable vertically along two uprights M of a carriage C, that is in turn movable horizontally along rails R to move along shelving S (Figure 5) of an automated warehouse, for moving objects removed from said shelving S, or to place objects on said shelving S, by means of the loading and unloading device 1.

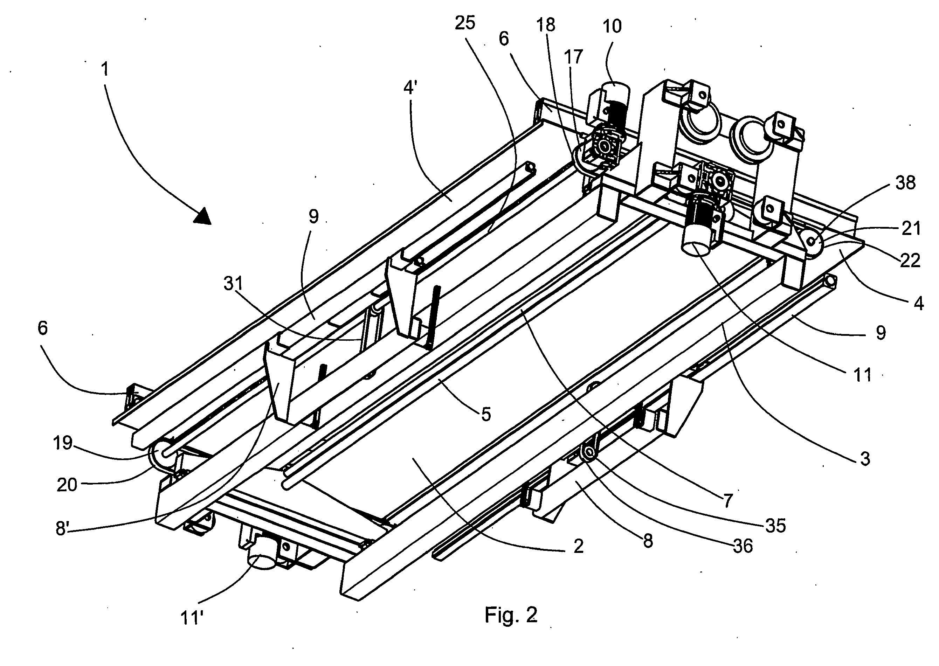

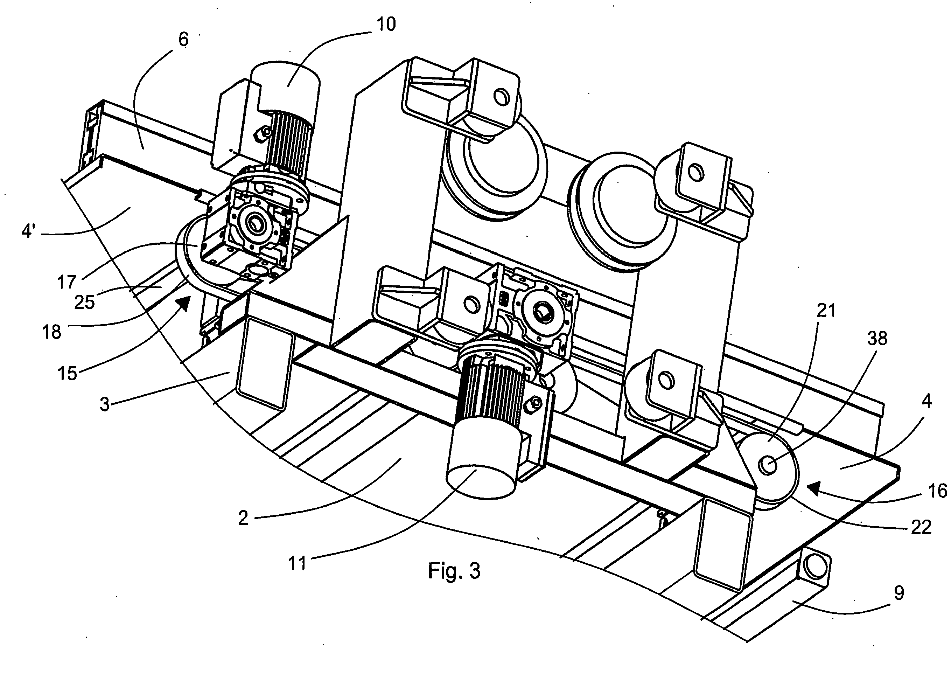

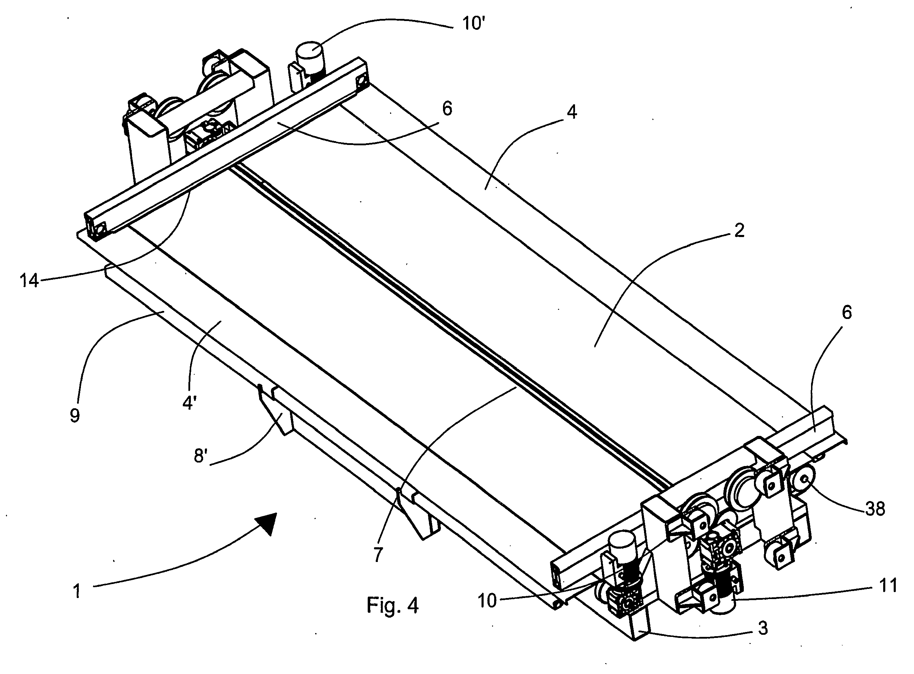

Alternatively, the loading and unloading device 1 can be associated with a shelving S and is suitable for moving only in a substantially vertical direction along said shelving S. In Figures 2 to 4 there is illustrated the loading and unloading device 1 according to the invention that is usable in the translator-elevator apparatus T for moving objects in an automated warehouse.

The loading and unloading device 1 is provided with a fixed shelf 2, fixed to a frame 3 and intended to support objects 12 to be stored in said shelving S, or to be removed therefrom.

With the fixed shelf 2 are associated a first movable shelf 4 and a second movable shelf 4', that are placed on opposite sides of said fixed shelf and are suitable for moving between an extended position in which they are substantially aligned on the fixed shelf 2 and a retracted position, in which they are below the fixed shelf 2.

The loading and unloading device 1 further comprises a pair of telescopic arms 6, which can be extended in opposite directions and are operationally associated with at least a bar 7 parallel to the fixed shelf 2, along which the arms 6 can be moved, synchronically or independently, for varying the distance between centres of said telescopic arms 6. In the case of synchronised movement of the arms 6, a single bar 7 is provided, which may comprise, for example, a circulating ball screw. In the case of an independent movement of the arms 6 two bars 7 are provided that are parallel to one another, one for each arm 6, each bar 7 being able to comprise a circulating ball screw. The movement of the telescopic arms 6 in a direction parallel to the fixed shelf 2 can also be achieved with systems of belts and pulleys. The fact that the telescopic arms 6 can be extended in opposite directions enables the loading and unloading device 1 according to the invention to remove objects from shelving S that face one another or to deposit objects thereupon.

At least a supporting element 8, vertically movable, is connected to the frame 3, the supporting element 8 supports one or more telescopic bars 9 that are suitable for coupling with said telescopic arms 6. Preferably, a first supporting element 8 and a second supporting element 8' are provided, that are placed on opposite sides of the loading and unloading device 1.

The loading and unloading device 1 is further provided with first driving means, comprising a first motor 10, for example an electric motor, that drives a first pair of belt transmissions 15, 15', connected to opposite ends of one of the two movable shelves, for example the second movable shelf 4', by respective connecting elements 26', 27, and a second motor 10', that drives a second pair of belt transmissions 16, 16', connected to opposite ends of the other movable shelf, for example the first movable shelf 4, by respective connecting elements 26, 27'. A first belt transmission 15 of said first pair of belt transmissions is provided with a drive pulley 17, driven by the motor 10, of a driven pulley 17' and of a belt 18 stretched between the two pulleys 17, 17', for example a toothed belt.

A second belt transmission 15' of said first pair of belt transmissions is provided with a drive pulley 19 and with a driven pulley 19' between which a belt 20, for example a toothed belt, is stretched.

The drive pulley 17 of the first belt transmission 15 and the drive pulley 19 of the second belt transmission 15' are connected together by a first shaft 25, so that the first motor 10, via said first shaft 25, drives both the drive pulley 17 of the first belt transmission 15 and the drive pulley 19 of the second belt transmission 15'.

The second pair of belt transmissions 16, 16' comprises a third belt transmission 16, provided with a drive pulley 21 and with a driven pulley 21', between which a third belt 22, for example a toothed belt, is stretched, and a fourth belt transmission 16' that comprises a drive pulley 23 and a driven pulley 23', between which a fourth belt 24, for example a toothed belt, is stretched.

The drive pulley 21 of the third belt transmission 16 and the drive pulley 23 of the fourth belt transmission 16' are connected together by a second shaft 38, so that the second motor 10' drives, by said second shaft 38, both the drive pulley 21 of the third belt transmission 16 and the drive pulley 23 of the fourth belt transmission 16'.

The first shaft 25 further drives a fifth belt transmission 28 comprising a drive pulley 29 fixed to the first shaft 25, a driven pulley 30 and a belt 31, for example a toothed belt, stretched between the drive pulley 29 and the driven pulley 30. The belt 31 is connected to the second supporting element 8' that carries the telescopic bars 9 by respective connecting means 32.

The second shaft 38 further drives a sixth belt transmission 33 comprising a drive pulley 34 fixed to the second shaft 38, a driven pulley 35 and a belt 36, for example a toothed belt, stretched between the drive pulley 34 and the driven pulley 35. The belt 36 is connected to the first supporting element 8 that carries the telescopic bars 9 by respective connecting means 37.

By driving the motors 10 and 10' the movable shelves 4 and 4' can be moved between an extended position and a retracted position and vice versa.

When the movable shelves 4 and 4' are moved from the extended position to the retracted position, the supporting elements 8, 8' of the telescopic bars 9 are lifted by means of the fifth belt transmission 28 and the sixth belt transmission 33, until the telescopic bars 9 are taken to the level of the telescopic arms 6, so that telescopic arms 6 can remove a telescopic bar from one of the supporting elements 8, 8', or replace the telescopic bar thereupon. When, conversely, the movable shelves 4, 4' are moved from the retracted position to the extended position, the supporting elements 8, 8' are lowered until they are below the movable shelves 4, 4'.

The loading and unloading device 1 is further provided with second driving means 11, 11' comprising, for example, a first electric motor 11, suitable for moving the telescopic arms 6 along the bar 7 for varying the distance between centres of said telescopic arms 6, and a second electric motor 11' for commanding, by a further shaft 5, the extension of the telescopic arms 6. If two bars 7 are used, in order to be able to move the telescopic arms 6 independently, a motor will be provided for each telescopic arm.

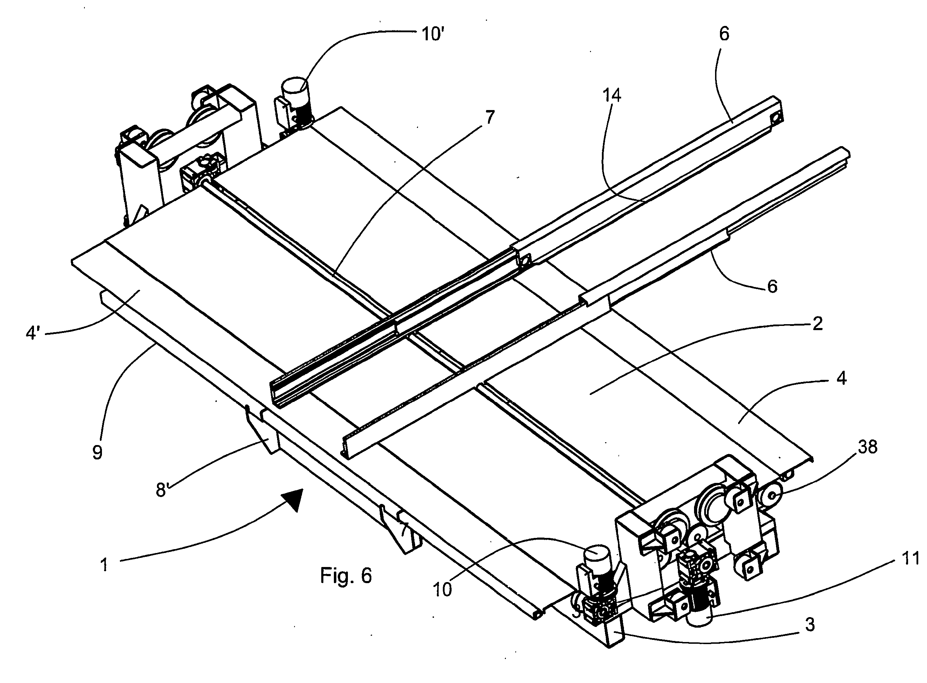

In Figures 5 and 6 there is illustrated a first operating condition of the loading and unloading device 1 according to the invention in which the loading and unloading device is arranged for removing single objects 12 from a stack of objects 13, or for depositing single objects 12 on a stack of objects 13.

In this operating condition the objects 12 are moved only by using the telescopic arms 6.

In order to remove an object 12 from a stack 13, the loading and unloading device 1 is moved along the uprights M of the translator-elevator apparatus T until the fixed shelf 2 is taken to the level of the object 12 to be removed from the top of the stack 13, and the telescopic arms 6 are then extended so as to move on opposite sides of the object 12 and are then moved towards one another by being moved along the bar 7, until they come into contact with the object 12 and grasp the object 12.

In order to facilitate grasping of the object 12, the telescopic arms 6 can be provided with horizontal protrusions 14, in the form of a bracket, that are suitable for being placed below the base of the object 12 and for supporting the object 12.

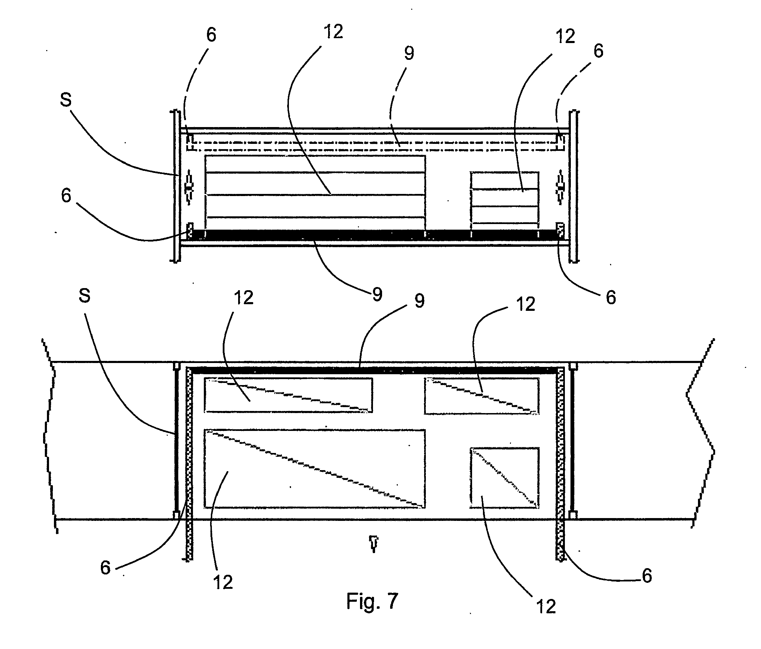

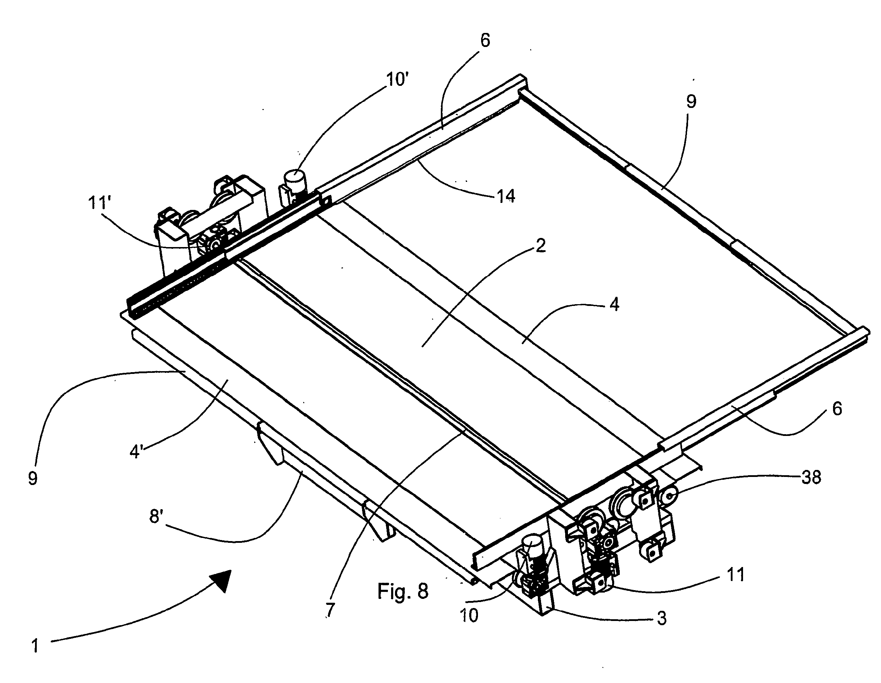

When the telescopic arms 6 have grasped the object 12, they are retracted until they take the object 12 to the fixed shelf 2 and place the object 12 thereupon, or alternatively, the object 12 is kept blocked between the telescopic arms 6. Vice versa, to place an object 12 on top of a stack of objects 13, the object 12 placed on the fixed shelf 2 of the loading and unloading device 1 is blocked between the telescopic arms 6, then the loading and unloading device 1 is moved along the uprights M of the translator-elevator apparatus T until the fixed shelf 2 is taken to the level of the top of the stack 13 on which the object 12 has to be placed. When the fixed shelf 2 has reached the level of the top of the stack 13, the telescopic arms 6, with the object 12 blocked between the telescopic arms 6, are extended until the object 12 is taken to the top of the stack 13. Lastly, the loading and unloading device 1 is slightly lowered to bring the object 12 into contact with the top of the stack 13 and the telescopic arms 6 are spaced apart from one another to release the object 12 and are retracted. In Figures 7 and 8 there is illustrated a second operating configuration of the loading and unloading device 1 according to the invention, in which the device is configured for unloading all the objects 12 located on a shelf of shelving S.

In this operating configuration both the telescopic arms 6 and a telescopic bar 9 are used.

In order to remove all the objects 12 located on a shelf of shelving S, the movable shelf 4, or 4' is first moved to the retracted position and the respective supporting element 8, or 8' is lifted to bring the telescopic bars 9 to the level of the ends of the telescopic arms 6 that are moved towards one another until said ends engage in the ends of one of the telescopic bars 9, gripping the ends of the telescopic bars 9. After the telescopic arms 6 have gripped a telescopic bar 9, the supporting element 8, or 8' is lowered, enabling the respective movable shelf 4, or 4' to return to the starting position.

Subsequently, the loading and unloading device 1 is lifted until it takes the telescopic arms 6, with the telescopic bar 9, to a level that is higher than the top of the object 12, or of the stack of objects 13 with the greatest height located on the shelf of the shelving S from which said objects 12 have to be removed. The telescopic arms 6 are then extended until the telescopic bar 9 is taken beyond the objects 12 to be removed and are moved towards one another, or moved away from one another to vary the length of the telescopic bar 9 in function of the overall dimensions of the objects 12 to be removed. The loading and unloading device 1 is then lowered until the fixed shelf 2 is taken to the level of the shelf of the shelving S and the telescopic arms 6 are retracted, so that the telescopic bar 9 comes into contact with the objects 12 to be removed and drags the objects 12 to be removed onto the fixed shelf 2. Lastly, the telescopic bar 9 is replaced on the corresponding supporting element 8, 8', the movable shelf 4, or 4' is returned to the extended position and the corresponding supporting element 8, 8' is lowered so as to move below the movable shelf 4, 4'. This operation is to be performed if it is necessary to change the telescopic bar 9 to push the objects 12 that lie on the fixed shelf 2 in a direction opposite the direction along which the objects 12 were dragged from the shelving S to the fixed shelf 2.

The same operations described are performed in reverse sequence for transferring objects 12 onto the shelves of the shelving S of the warehouse.

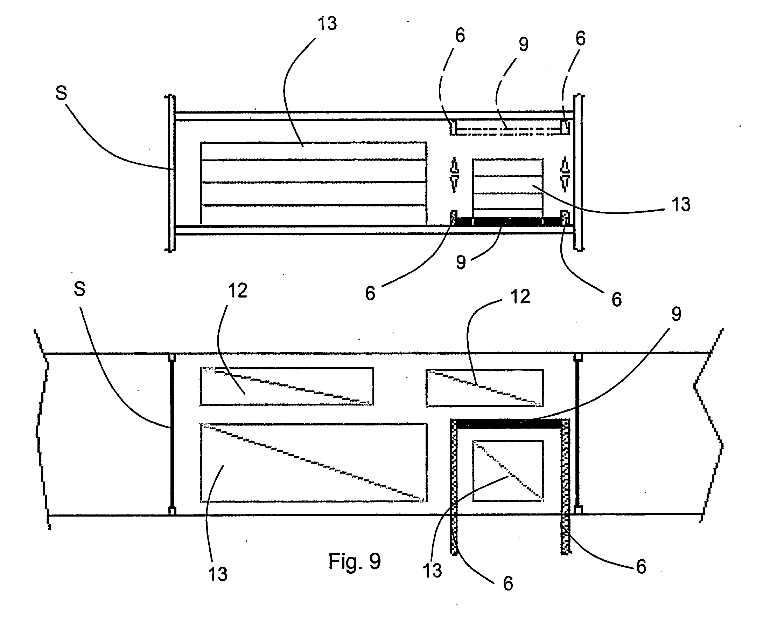

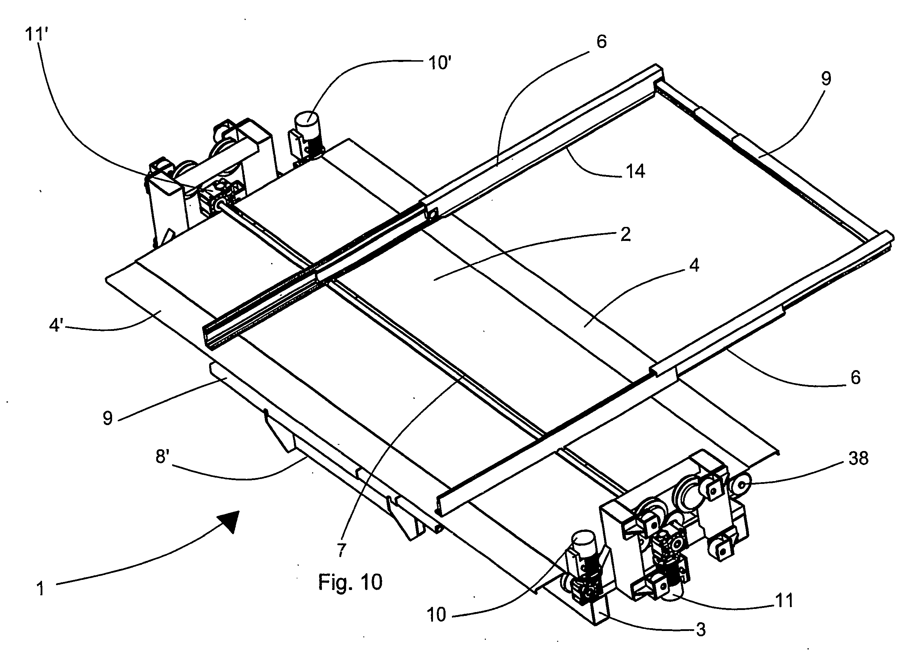

In Figures 9 and 10 a further operating configuration of the loading and unloading device 1 according to the invention is illustrated in which the loading and unloading device removes from a shelf of a shelving S, or places on a shelf of shelving S, a single object 12, or a group of objects 12, or a stack 13 of objects, or a group of stacks 13 of objects.

In this operating configuration the loading and unloading operations are performed in a completely similar manner to the loading and unloading operations illustrated with reference to Figures 7 and 8, nevertheless using a telescopic bar 9 of a lesser length than the telescopic bar 9 used in the preceding case, or regulating, via the telescopic arms 6, the length of the telescopic bar 9, in function of the overall dimensions of the objects 12 or of the stacks 13 of objects to be removed from or to be placed on the shelving S. The device according to the invention is also suitable for removing objects from or depositing objects on shelves of the so-called "comb" type, i.e. shelves consisting of a series of horizontal rods arranged like the teeth of a comb. In this case only the telescopic arms 6 can be used, even if it is equally possible, alternatively, to use the telescopic arms 6 with the telescopic bar 9.

In the case of using only telescopic arms 6 to remove an object 12 from a shelf, the telescopic arms 6 are inserted from below between the rods of the shelf until they move on the sides of the object 12 to be removed in order to be then moved towards one another to enter in contact with the object 12 and clamp the object between the telescopic arms 6 to take then the object 12 to the loading and unloading device 1. In order to deposit an object 12 on one of said shelves, the telescopic arms 6, which have removed the object 12, from the loading and unloading device 1, are inserted from above between the rods of a comb shelf, until the object is deposited on the shelf.

In the case of use of the telescopic arms 6 with the telescopic bar 9, the loading and unloading operations are performed as disclosed previously with reference to Figures 5 to 10.

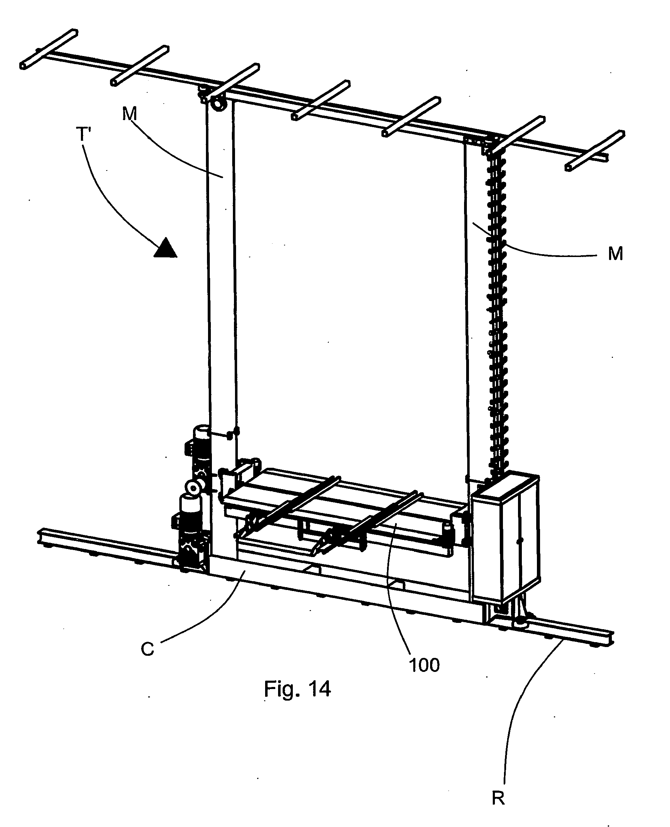

In Figure 14 there is schematically illustrated a translator-elevator apparatus T' provided with a loading and unloading device 100 according to a version of the present invention.

Similarly to the translator-elevator apparatus T illustrated in Figure 1, the translator-elevator apparatus T' comprises a loading and unloading device 100 that is movable vertically along two uprights M of a carriage C, that is in turn movable horizontally along rails R to move along shelving S (Figure 5) of an automated warehouse, to move objects removed by said shelving S, or to replace objects on said shelving S, by the loading and unloading device 100.

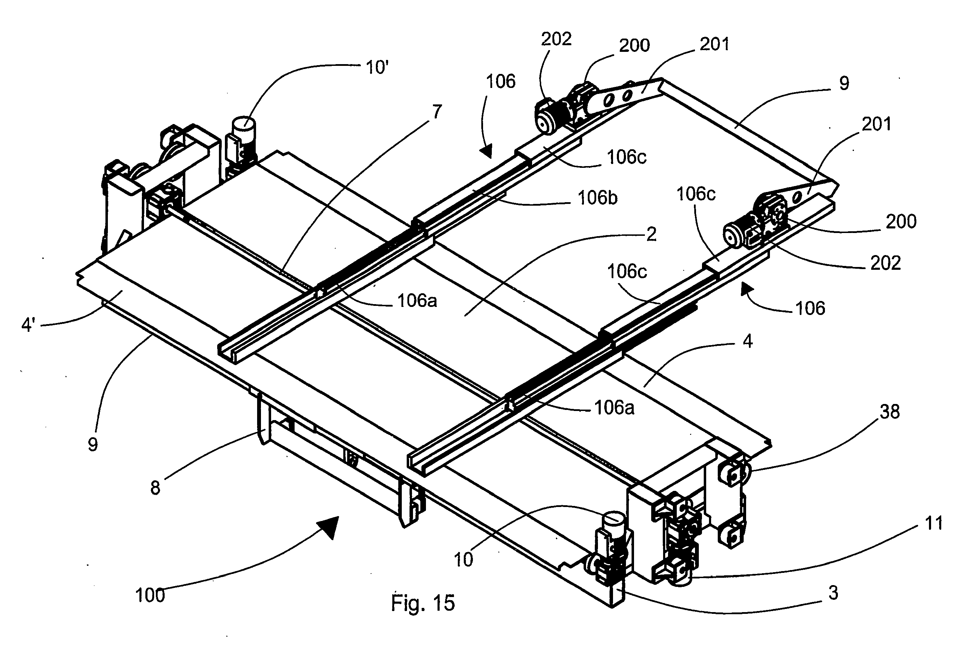

In Figure 15 there is illustrated the loading and unloading device 100. For the elements of the loading and unloading device 100 that are similar to those of the loading and unloading device 1 were used the same reference numbers used in the description of the loading and unloading device 1.

The loading and unloading device 100 is provided with a fixed shelf 2, fixed to a frame 3 and intended to support the objects 12 to be stored in said shelving S, or to be removed therefrom.

With the fixed shelf 2 a first movable shelf 4 and a second movable shelf 4' are associated that are located on opposite sides of said fixed shelf 2 and are suitable for moving between an extended position in which they are substantially aligned on the fixed shelf 2 and a retracted position, in which they are below the fixed shelf 2.

The loading and unloading device 100 further comprises a pair of telescopic arms 106, each consisting of three sections 106a, 106b, 106c, that can slide in relation to one another, so that each telescopic arm 106 can be extended in opposite directions. The first section 106a of each telescopic arm 106 is operationally associated with at least a bar 7 parallel to the fixed shelf 2, along which the arms 106 can be moved, synchronically or independently, for varying the distance between centres of said telescopic arms 106. In the case of synchronised movement of the arms 106, there is provided a single bar 7, which may comprise, for example, a circulating ball screw. In the case of independent movement of the arms 106 two bars 7 are provided that are parallel to one another, one for each arm 106, each bar 7 being able to comprise a circulating ball screw. The movement of the telescopic arms 6 in a direction parallel to the fixed shelf 2 can also be made with systems of belts and pulleys. The fact that the telescopic arms 106 can be extended in opposite directions enables the loading and unloading device 100 according to the invention to remove objects from mutually facing shelving S and deposit objects thereupon.

The third section 106c of each telescopic arm 106 is provided with a supporting element 200 on which is hinged a respective rotating arm 201, that is rotated around the support 200 by a respective gear motor 202.

The arms 201 are suitable for coupling with a telescopic bar 9, the ends of which are suitable for engaging in the ends of the rotating arms 201.

At least a vertically movable supporting element 8 is further connected to the frame 3, which supporting element 8 supports one or more telescopic bars 9 suitable for coupling with said rotating arms 201. Two supporting elements 8 can be provided at opposite sides of the loading and unloading device 100. The variation of the distance between centres of the telescopic arms 106, the movement of the movable shelves 4, 4' and of the supporting elements 8 occurs in the manner already described with reference to the loading and unloading device 1 and will not therefore be disclosed in detail here. The rotating arms 201 with which the telescopic bar 9 is coupled enable the loading and unloading device 100 to operate to shelving S arranged on opposite sides of the loading and unloading device 100, without the need to reposition the telescopic bar 9, as required in the loading and unloading device 1, in which, if it is necessary to change the side of the loading and unloading device 1 from which to run the operations of loading and unloading of the objects 12, the telescopic bar 9 must be released from an end of the telescopic arms 6 and be hooked to the opposite end of said arms. This operation is no longer required in the loading and unloading device 100, because the telescopic bar 9 is repositioned by simply rotating the rotating arms 201 with respect to the respective supports 200, without it being required to release the telescopic bar 9 from the arms 201. This enables the downtime in operation of the loading and unloading device 100 to be considerably reduced.

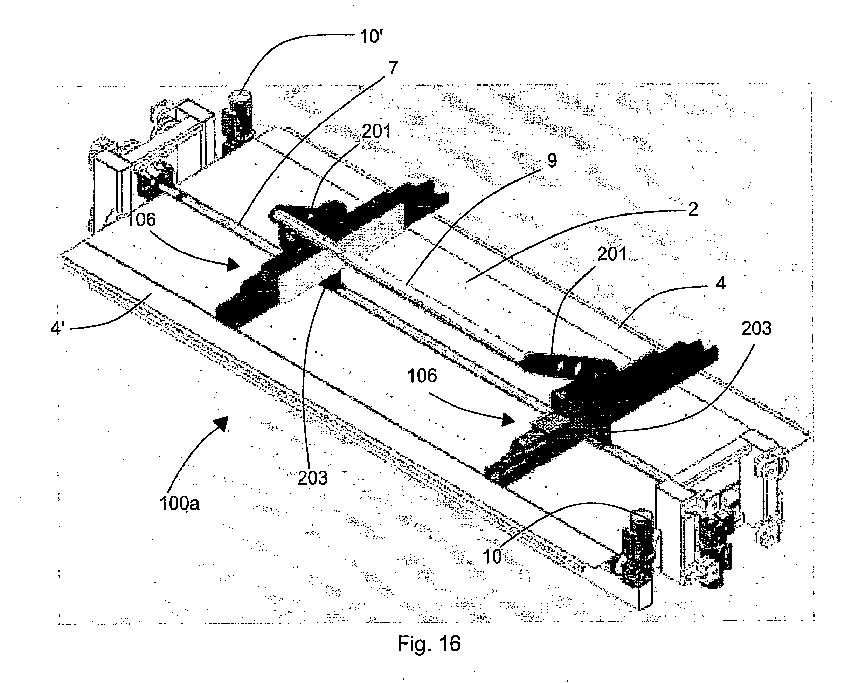

It should further be noted that using telescopic arms 106 consisting of three sections 106a, 106b and 106c enables objects 12 to be deposited or removed in any position on shelving S with a single operation, inasmuch as the telescopic arms 106 are able to reach the zones of the shelving S that are further from the sides of the loading and unloading device 100. This enables the operation of the loading and unloading device 100 to be further accelerated. In Figure 16 there is illustrated a first version 100a of the loading and unloading device 100 illustrated in Figures 14 and 15.

In this first version the telescopic arms 106 are associated with a respective lifting device 203, for example of electromechanical type, by means of which it is possible to vary the height of the telescopic arms 106 with respect to the fixed shelf 2. This version is advantageous in the case of warehouses with different shelves heights, inasmuch as it enables the loading and unloading device 100a to be adapted to different shelves heights. A further advantage of this version lies in the fact that, owing to the lifting devices 203, it is possible to increase the maximum distance obtainable between the telescopic bar 9 and the fixed shelf 2, which enables the maximum height of the objects 12 to be increased that can be surpassed by the telescopic bar 9, when they are on the fixed shelf 2.

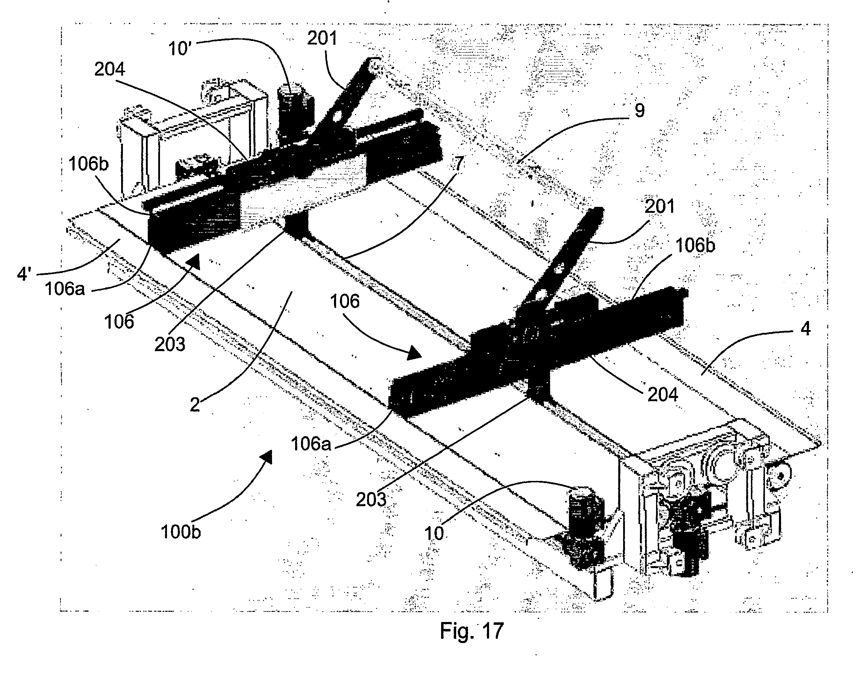

In Figure 17 there is illustrated a second version 100b of the loading and unloading device 100. In this version the loading and unloading device 100b is provided with telescopic arms 106b each consisting of two sections 106a and 106b that are slidable in relation to one another. The rotating arms 201 are each hinged on a respective driven slide 204 that slides on the second section 106b of the respective telescopic arm 106. This version 100b of the loading and unloading device, owing to the driven slides 204, enables to improve the exploitation of the space in depth on the shelves of the shelving S of the warehouse. Also in this version the arms 106 can be associated with respective lifting devices 203 to vary the height of the arms 106 with respect to the fixed shelf 2 of the loading and unloading device 100b.

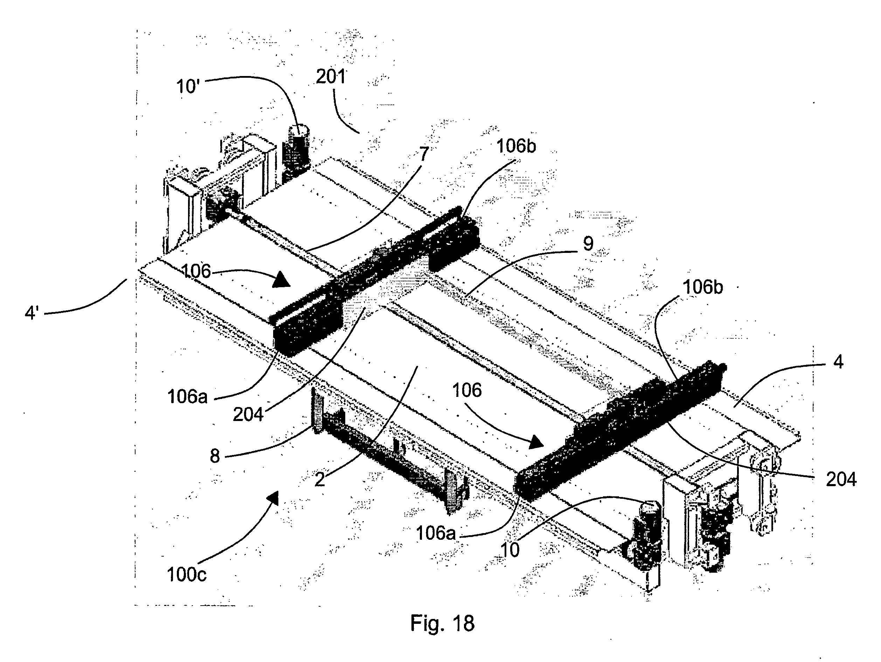

In Figure 18 there is illustrated a third version 100c of the loading and unloading device 100.

In this version the loading and unloading device 100c is provided with telescopic arms 106b, each consisting of two sections 106a and 106b that are slidable with respect to one another. On the second section 106b of each telescopic arm 106 a driven slide 204 is slidable. The telescopic bar 9 is coupled with the driven slides 204. Similarly to the second version 100b of the loading and unloading device, also in this third version 100c the driven slides 204 enable to improve the exploitation of the space in depth on the shelves of the shelving S of the warehouse.

The operation of the loading and unloading devices 100, 100a, 100b and 100c is similar to the previously illustrated operation of the loading and unloading device 1.

In the first operating condition, illustrated in Figures 5 and 6, the loading and unloading device 100, 100a, 100b, 100c is arranged for removing single objects 12 from a stack of objects 13, or for depositing single objects 12 on a stack of objects 13.

In this operating condition the objects 12 are moved by using only the telescopic arms 106 and the telescopic bar 9 is not used.

In order to remove an object 12 from a stack 13, the loading and unloading device 100, 100a, 100b, 100c is moved along the uprights M of the translator-elevator apparatus T, until the fixed shelf 2 is brought to the level of the object 12 to be removed from the top of the stack 13, the telescopic arms 106 are then extended so as to move on opposite sides of the object 12 and are then moved towards one another, by moving along the bar 7 until they come into contact with the object 12 and grip the object 12.

When the telescopic arms 106 have grasped the object 12 they are retracted until the telescopic arms 106 take the object 12 to the fixed shelf 2 and deposit the object 12 thereupon, or, alternatively, the object 12 is maintained blocked between the telescopic arms 106.

Vice versa, to place an object 12 on top of a stack of objects 13, the object 12 placed on the fixed shelf 2 of the loading and unloading device 100, 100a, 100b, 100c, is blocked between the telescopic arms 106, then the loading and unloading device 100, 100a, 100b, 100c is moved along the uprights M of the translator-elevator apparatus T until the fixed shelf 2 is taken to the level of the top of the stack 13 on which the object 12 has to be deposited. When the fixed shelf 2 has reached the level of the top of the stack 13, the telescopic arms 106, between which the object 12 is blocked, are extended until the object 12 is brought to the top of the stack 13. Lastly, the loading and unloading device 100, 100a, 100b, 100c is slightly lowered to bring the object 12 into contact with the top of the stack 13 and the telescopic arms 106 are moved away from one another to release the object 12 and are retracted. Alternatively, it is possible to use for this operation the lifting devices 203 to bring the object 12 into contact with the top of the stack 13. In this case, the telescopic arms 106 are lifted, moving the telescopic arms 106 away from the fixed shelf 2, before bringing the object 12 to the top of the stack 13, they are then lowered to deposit the object 12 on the top of the stack 13.

In the second operating configuration illustrated in Figures 7 and 8, the loading and unloading device 100, 100a, 100b, 100c is configured for unloading all the objects 12 located on a shelf of shelving S.

In this operating configuration both the telescopic arms 106 and a telescopic bar 9 fixed to the rotating arms 201, or to the slides 204 are used.

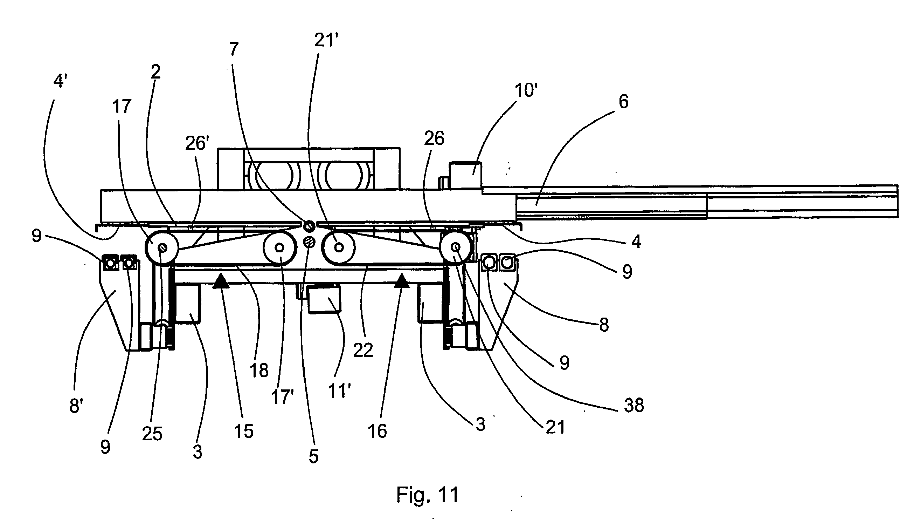

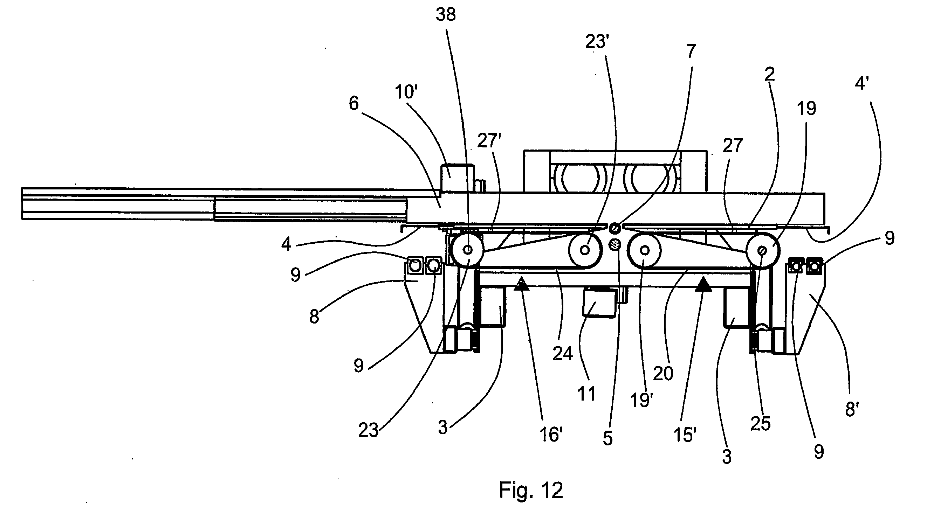

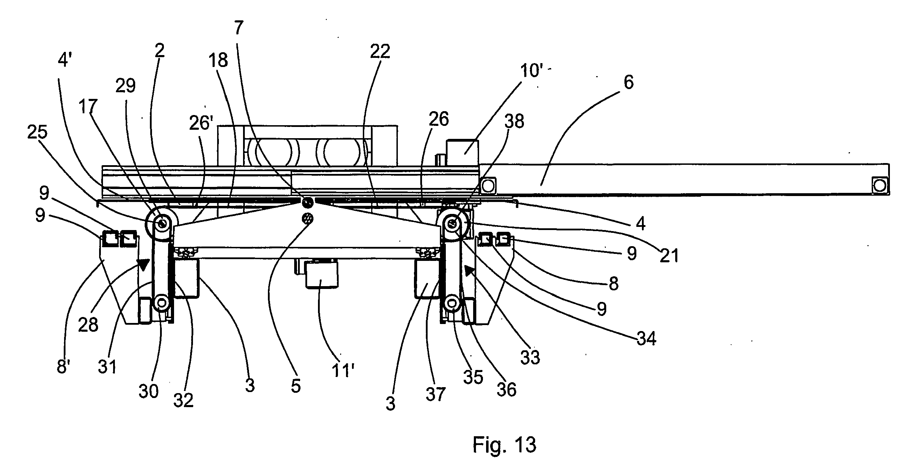

In order to remove all the objects 12 located on a shelf of shelving S, the telescopic bar 9 is connected to the rotating arms 201 or to the slides, possibly removing the telescopic bar 9 from the supporting elements 8, 8', as already disclosed with reference to the operation of the embodiment of the loading and unloading device 1 illustrated in Figures 1 to 13. The loading and unloading device 100, 100a, 100b, 100c, is then lifted until the telescopic arms 106, with the telescopic bar 9, are taken to a lever that is higher than the height of the object 12, or of the stack of objects 13 of greater height located on the shelf of the shelving S from which said objects 12 have to be removed. The telescopic arms 106 are then extended until the telescopic bar 9 is taken beyond the objects 12 to be removed and are moved towards one another, or moved away from one another, to vary the length of the telescopic bar 9, in function of the overall dimensions of the objects 12 to be removed. The loading and unloading device 100, 100a, 100b, 100c is then lowered to take the fixed shelf 2 to the level of the shelf of the shelving S and the telescopic arms 106 are retracted so that the telescopic bar 9 comes into contact with the objects 12 to be removed and drags the objects 12 to be removed onto the fixed shelf 2. Lastly, the telescopic bar 9 can be placed on the corresponding supporting element 8, 8', or can remain connected to the rotating arms 201, or to the slides 204, for subsequent loading or unloading operations.

The same disclosed operations are performed in reverse sequence for transferring objects 12 onto the shelves of the shelving S of the warehouse.

In the further operating configuration illustrated in Figures 9 and 10 the loading and unloading device is arranged for removing from a shelf of a shelving S, or placing on a shelf of a shelving S, a single object 12, or a group of objects 12, or a stack 13 of objects, or a group of stacks 13 of objects.

In this operating configuration the loading and unloading operations are performed in a completely similar manner to the loading and unloading operations illustrated with reference to Figures 7 and 8, nevertheless using a telescopic bar 9 of shorter length than the telescopic bar 9 used in the precious case, or regulating, through movement of the telescopic arms 106 along the fixed shelf 2, the length of the telescopic bar 9, in function of the overall dimensions of the objects 12 or of the stacks 13 of objects to be removed, or to be placed onto the shelving S.

Also the embodiments 100, 100a, 100b, 100c of the loading and unloading device according to the invention are suitable for removing from and depositing objects on so-called "comb" shelves, i.e. shelves consisting of a series of horizontal rods arranged as teeth of a comb. In this case only the telescopic arms 106 can be used, even if it is equally possible to use, alternatively, the telescopic arms 106 with the telescopic bar 9.***

In the case of use of only the telescopic arms 106, to remove an object 12 from a shelf, the telescopic arms 6 are inserted from the below between the rods of the shelf until they move on the sides of the object 12 to be removed, in order to be then moved towards one another to enter into contact with the object 12 and clamp the object 12 between the telescopic arms 106 to then take the object 12 to the loading and unloading device 100a, 100a, 100b, 100c. In order to deposit an object 12 on one of said shelves, the telescopic arms 106, which have removed the object 12 from the loading and unloading device 100, 100a, 100b, 100c, are inserted from above between the rods of a comb shelf until the object is deposited on the shelf.

In the case of use of the telescopic arms 106 with the telescopic bar 9, the loading and unloading operations are performed as disclosed previously with reference to Figures 5 to 10.

The present invention also relates to a method for managing a storage plant for storing objects, in which loading and unloading devices according to the invention are used.

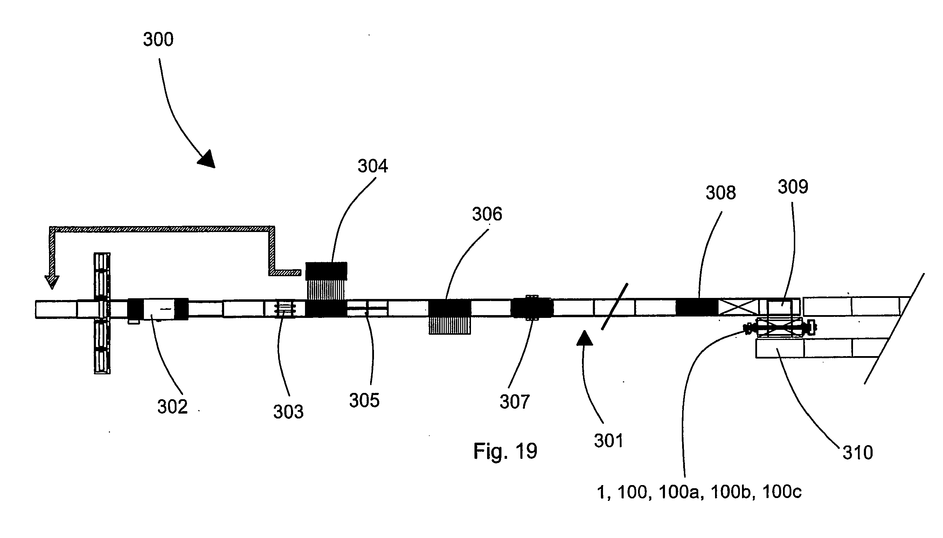

In Figure 19 there is schematically illustrated the layout of a storage plant 300 for storing objects, in particular packaged objects.

The plant comprises a conveying line 301 for conveying objects coming from one or more production lines. Along the conveying line 301 a packaging station 302 is arranged in which the objects that arrive along the conveying line are packaged and provided with an identifying code, for example a barcode that identifies the features of the object, such as, for example, dimensions, production batch, and destination. If the packaging of the object is transparent, the aforesaid barcode can be impressed directly on the object.

Downstream of the packaging station 302 a station 303 is arranged for centring and measuring the dimensions of the packaged object, in which the packaged object is centred on the conveying line and the three dimensions of the packaged object are subjected to measuring.

Downstream of the centring and packaging station 303 an evacuating station 304 is arranged for evacuating possible objects that have defective packaging, for example when the dimensions of the packaging of an object do not correspond to the preset dimensions of the packaging provided for said object.

Downstream of the evacuating station 304 a rotation station 305 is arranged in which the packaged objects can be rotated by 90° to orient the packaged objects in the most suitable position for subsequent storage.

Downstream of the rotation station 305 a temporary storage warehouse 306 is arranged that consists, for example, of a series of superimposed shelves served by an elevating device, in which objects can be temporarily stored that, for whatever reason, cannot be immediately sent to the final storage warehouse 310.

Downstream of the temporary warehouse 306 a superimposing station 307 is arranged in which stacks of superimposed objects can be formed that are intended for being placed on the shelving S of the final storage warehouse 310.

Downstream of the superimposing station a decentring station 308 is arranged in which the packaged objects can be moved with respect to an axes of the conveying device 301 to take the packaged objects to an edge of the conveying device 301, where this is required for the subsequent operations. Downstream of the decentring station 308 a precomposition station 309 is arranged that comprises a plurality of superimposed shelves served by an elevating device, on each shelf being arranged groups of objects grouped according to a preset criterion, intended for being stored on the same shelf of the final storage warehouse 310.

The translator-elevator device 1, 100, 100a, 100b, 100c, according to the invention removes the objects from the shelves of the precomposition station 309 and deposits the objects on the shelving of the final storage warehouse 310. The method for managing distribution of the packaged objects on the shelving of the final storage warehouse 310 occurs according to the criteria illustrated below, managed by a computerised system that controls all the operations of the storage plant.

Managing distribution of the objects in the final storage warehouse 310 comprises the following steps:
- analysis of the flows of incoming objects that reach the storage plant 300 coming from a plurality of production lines;
- analysis of the flows of objects leaving the storage plant 300 to be sent to a final destination;
- calculation of the space required in the final storage warehouse 310 in function of said inflows and of said outflows, so as to optimize the required space for the storage of the objects in the final storage warehouse 310;
- division of the objects coming from said inflows into groups of homogenous objects according to preset criteria, such as, for example, the type of objects or the final destination of the objects;
- determination of the position in which to arrange each group of objects on the shelving S of the final storage warehouse 310, in function of the overall dimensions of each group of objects, so as to optimize the exploitation of the space on said shelving S, said space being defined by the area of each shelving S and by the distance, in a vertical direction, between a shelving S. and the shelving S that is immediately there above.

The management method further comprises the following steps:
- identifying each packaged object by reading the barcode associated with the object;
- measuring the dimensions of the object;
- comparing the measured dimensions of the object with the dimensions indicated on the aforesaid barcode;
- removing an object from the conveying line 301 if the measured dimensions of the object do not correspond to those indicated in said barcode;
- possible rotation by 90° of the object ;
- possible dispatch to the temporary storage warehouse 306 of an object that cannot be sent immediately to the final storage warehouse 310;
- possible preparation of stacks of objects belonging to the same group of objects;
- possible decentring of the objects or stacks of objects with respect to an axis of the conveying line 301;
- arrangement of the objects on the shelves of the precomposition station 309 for forming groups of homogenous objects;
- transfer of the groups of homogenous objects from said precomposition station 309 in preset positions in said final storage warehouse 310, by the loading and unloading device 1, 100, 100a, 100b, 100c according to the invention;
- removal of homogenous groups of objects from the final storage warehouse 310 by the loading and unloading device 1, 100, 100a, 100b, 100c.

The loading and unloading operations are managed in the final storage warehouse 310 so as to optimize exploitation of the storage space so as to minimize the dimensions required for the warehouse 310, ensuring that all the objects coming from the production lines are located in the warehouse 310 and that the unused spaces are minimized.

## Claims

1. Loading and unloading device (1; 100; 100a; 100b; 100c) associable with a translator-elevator apparatus (T) for transferring objects (12) onto shelving (S) of a warehouse, or removing therefrom, said loading and unloading device (1; 100; 100a; 100b; 100c) being suitable for moving between said shelving (S) or onto said shelving (S), said loading and unloading device (1) being provided with a fixed shelf (2) suitable for supporting said objects (12), said loading and unloading device (1) comprising at least a pair of telescopic arms (6; 106) associated with said fixed shelf (2), said telescopic arms (6; 106) being movable with respect to one another in a direction that is substantially parallel to said fixed shelf (2), for varying the distance between centres of said telescopic arms (6; 106), said loading and unloading device (1; 100; 100a; 100b; 100c) further comprising at least one telescopic bar (9), **characterized in that** said telescopic arms are capable of engaging in ends of said at least one telescopic bar (9) and grip said ends of said at least one telescopic bar (9).

2. Device (1; 100; 100a; 100b; 100c) according to claim 1, wherein said at least one telescopic bar (9) comprises a plurality of telescopic bars (9) having lengths that are different from one another.

3. Device (1; 100; 100a; 100b; 100c) according to claim 1, or 2, further comprising at least a movable shelf (4, 4') associated with said fixed shelf (2), said at least a movable shelf (4, 4') being movable between an extended position in which it is substantially aligned on said fixed shelf (2) and a retracted position in which it is below said fixed shelf (2).

4. Device (1; 100; 100a; 100b; 100c) according to claim 3, wherein said at least a movable shelf (4, 4') comprises a first movable shelf (4) and a second movable shelf (4') arranged on sides opposite with respect to said fixed shelf (2).

5. Device (1; 100; 100a; 100b; 100c) according to any preceding claim, wherein said telescopic arms (6; 106) are extendible in opposite directions.

6. Device (1; 100; 100a; 100b; 100c) according to any preceding claim, wherein said telescopic arms (6; 106) are movable along at least a bar element (7) parallel to said fixed shelf (2).

7. Device (1; 100; 100a; 100b; 100c) according to claim 6, wherein said at least a bar element (7) comprises two bar elements (7), each of which is associated with one of said telescopic arms (6; 106).

8. Device (1; 100; 100a; 100b; 100c) according to any preceding claim, further comprising at least a supporting element (8, 8') suitable for supporting at least one of said telescopic bars (9).

9. Device (1; 100; 100a; 100b; 100c) according to claim 8, wherein said at least a supporting element (8, 8') is movable in a direction substantially perpendicular to said fixed shelf (2).

10. Device (1; 100; 100a; 100b; 100c) according to claim 8, or 9, wherein said at least a supporting element (8, 8') comprises a first supporting element (8) and a second supporting element (8') arranged on sides opposite with respect to said fixed shelf (2).

11. Device (1; 100; 100a; 100b; 100c) according to any preceding claim in combination with claim 3, further comprising first driving means (10, 10') suitable for driving said at least a movable shelf (4, 4').

12. Device (1; 100; 100a; 100b; 100c) according to claim 11, wherein said first driving means (10, 10') is suitable for driving said at least a supporting element (8, 8').

13. Device (1; 100; 100a; 100b; 100c) according to one of claims 6 to 12, further comprising second driving means (11, 11') suitable for driving said telescopic arms (6; 106) to vary the distance between centres of said telescopic arms (6; 106) and the length of said telescopic arms (6; 106).

14. Device (1; 100; 100a; 100b; 100c) according to claim 13, wherein said second driving means comprises at least a first motor (11) for varying the distance between centres of said telescopic arms (6; 106) and at least a second motor (11') for varying the length of said telescopic arms (6; 106).

15. Device (1; 100; 100a; 100b; 100c) according to claim 14, when appended to one of claims 7 to 13, wherein said at least a first motor (11) comprises a pair of motors, each of which is intended to move one of said telescopic arms (6; 106) along one of said two bar elements (7), independently from the other telescopic arm (6; 106).

16. Device (100; 100a; 100b; 100c) according to any preceding claim, wherein each of said telescopic arms (106) is associated with a respective lifting device (203).

17. Device (100; 100a) according to any preceding claim, wherein said telescopic arms (106) comprise three sections (106a, 106b, 106c), that can slide in relation to one another.

18. Device (100; 100a) according to claim 17, wherein a third section (106c) of each telescopic arm (106) is provided with a supporting element (200) on which is hinged a respective rotating arm (201), that is rotated around said support (200) by a respective gear motor (202).

## Patentansprüche

1. Belade- und Entladevorrichtung (1; 100; 100a; 100b; 100c), die mit einem Verschiebe-Hebeapparat (T) in Verbindung bringbar ist, um Objekte (12) auf Regale (S) eines Lagerhauses zu überführen oder von dort zu entnehmen, wobei die Belade- und Entladevorrichtung (1; 100; 100a; 100b; 100c) dazu geeignet ist, sich zwischen den Regalen (S) oder auf die Regale (S) zu bewegen, wobei die Belade- und Entladevorrichtung (1) mit einer festen Platte (2) versehen ist, die geeignet ist, die Objekte (12) zu tragen, wobei die Belade- und Entladevorrichtung (1) zumindest ein Paar Teleskoparme (6; 1.06) aufweist, die mit der festen Platte (2) in Verbindung stehen, wobei die Teleskoparme (6; 106) bezüglich zueinander in einer Richtung beweglich sind, wobei die im Wesentlichen parallel zu der festen Platte (2) ist, um den Abstand zwischen Mitten der Teleskoparme (6; 106) zu verändern, wobei die Belade- und Entladevorrichtung (1; 100; 100a; 100b; 100c) weiterhin zumindest eine Teleskopstange (9) aufweist, **dadurch gekennzeichnet, dass** die Teleskoparme geeignet sind, mit Enden der zumindest einen Teleskopstange (9) in Eingriff zu kommen und die Enden der zumindest einen Teleskopstange (9) zu greifen.

2. Vorrichtung (1; 100; 100a; 100b; 100c) nach Anspruch 1, wobei die zumindest eine Teleskopstange (9) eine Vielzahl von Teleskopstangen (9) mit unterschiedlichen Längen aufweist.

3. Vorrichtung (1; 100; 100a; 100b; 100c) nach Anspruch 1 oder 2, weiterhin mit zumindest einer beweglichen Platte (4, 4'), die mit der festen Platte (2) in Verbindung steht, wobei die zumindest eine bewegliche Platte (4, 4') zwischen einer ausgefahrenen Position, in der sie im Wesentlichen auf die feste Platte (2) ausgerichtet ist, und einer eingefahrenen Position, in der sie unterhalb der festen Platte (2) ist.

4. Vorrichtung (1; 100; 100a; 100b; 100c) nach Anspruch 3, wobei die zumindest eine bewegliche Platte (4, 4') eine erste bewegliche Platte (4) und eine zweite bewegliche Platte (4') aufweist, die auf bezüglich der festen Platte (2) gegenüberliegenden Seiten angeordnet sind.

5. Vorrichtung (1; 100; 100a; 100b; 100c) nach einem der vorhergehenden Ansprüche, wobei die Teleskoparme (6; 106) in entgegengesetzte Richtungen ausfahrbar sind.

6. Vorrichtung (1; 100; 100a; 100b; 100c) nach einem der vorhergehenden Ansprüche, wobei die Teleskoparme (6; 106) entlang zumindest eines Stangenelements (7) parallel zu der festen Platte (2) beweglich sind.

7. Vorrichtung (1; 100; 100a; 100b; 100c) nach Anspruch 6, wobei das zumindest eine Stangenelement (7) zwei Stangenelemente (7) aufweist, von denen jedes mit einem der Teleskoparme (6; 106) in Verbindung steht.

8. Vorrichtung (1; 100; 100a; 100b; 100c) nach einem der vorhergehenden Ansprüche, weiterhin mit zumindest einem Tragelement (8, 8'), das geeignet ist, zumindest eine der Teleskopstangen (9) zu tragen.

9. Vorrichtung (1; 100; 100a; 100b; 100c) nach Anspruch 8, wobei das zumindest eine Tragelement (8, 8') in einer zu der Platte (2) im Wesentlichen senkrechten Richtung beweglich ist.

10. Vorrichtung (1; 100; 100a; 100b; 100c) nach Anspruch 8 oder 9, wobei das zumindest eine Tragelement (8, 8') ein erstes Tragelement (8) und ein zweites Tragelement (8') aufweist, die auf bezüglich der festen Platte (2) gegenüberliegenden Seiten angebracht sind.

11. Vorrichtung (1; 100; 100a; 100b; 100c) nach einem der vorhergehenden Ansprüche in Kombination mit Anspruch 3, weiterhin mit ersten Antriebsmitteln (10, 10'), die geeignet sind, um die zumindest eine bewegliche Platte (4, 4') anzutreiben.

12. Vorrichtung (1; 100; 100a; 100b; 100c) nach Anspruch 11, wobei die ersten Antriebsmittel (10, 10') geeignet sind, um das mindestens eine Tragelement (8, 8') anzutreiben.

13. Vorrichtung (1; 100; 100a; 100b; 100c) nach einem der Ansprüche 6 bis 12, weiterhin mit zweiten Antriebsmitteln (11, 11'), die geeignet sind, die Teleskoparme (6; 106) anzutreiben, um den Abstand zwischen Mitten der Teleskoparme (6; 106) und die Länge der Teleskoparme (6; 106) zu verändern.

14. Vorrichtung (1; 100; 100a; 100b; 100c) nach Anspruch 13, wobei die zweiten Antriebsmittel zumindest einen ersten Motor (11), um den Abstand zwischen Mitten der Teleskoparme (6; 106) zu verändern, und zumindest einen zweiten Motor (11') aufweisen, um die Länge der Teleskoparme (6; 106) zu verändern.

15. Vorrichtung (1; 100; 100a; 100b; 100c) nach Anspruch 14, sofern dieser von einem der Ansprüche 7 bis 13 abhängig ist, wobei der zumindest eine erste Motor (11) ein Paar Motoren aufweist, von denen jeder dazu bestimmt ist, einen der Teleskoparme (6; 106) unabhängig von dem anderen Teleskoparm (6; 106) entlang einem der zwei Stangenelemente (7) zu bewegen.

16. Vorrichtung (100; 100a; 100b; 100c) nach einem der vorhergehenden Ansprüche, wobei jeder der Teleskoparme (106) mit einer entsprechenden Hebevorrichtung (203) in Verbindung steht.

17. Vorrichtung (100; 100a) nach einem der vorhergehenden Ansprüche, wobei die Teleskoparme (106) drei Abschnitte (106a, 106b, 106c) aufweisen, die zueinander verschiebbar sind.

18. Vorrichtung (100; 100a) nach Anspruch 17, wobei ein dritter Abschnitt (106c) von jedem Teleskoparm (106) mit einem Tragelement (200) ausgestattet ist, an dem ein entsprechender Dreharm (201) angelenkt ist, der durch einen entsprechenden Getriebemotor (202) um das Tragelement (200) gedreht wird.

## Revendications

1. Dispositif de chargement et de déchargement (1 ; 100 ; 100a ; 100b ; 100c) pouvant être associé à un dispositif transtockeur (T) pour transférer des objets (12) sur des rayonnages (S) d'un entrepôt ou les en retirer, ledit dispositif de chargement et de déchargement (1 ; 100 ; 100a ; 100b ; 100c) étant apte à un déplacement entre lesdits rayonnages (S) ou sur lesdits rayonnages (S), ledit dispositif de chargement et de déchargement (1) étant pourvu d'une étagère fixe (2) apte à supporter lesdits objets (12), ledit dispositif de chargement et de déchargement (1) comprenant au moins une paire de bras télescopiques (6 ; 106) associés à ladite étagère fixe (2), lesdits bras télescopiques (6 ; 106) étant mobiles l'un par rapport à l'autre dans une direction qui est essentiellement parallèle à ladite étagère fixe (2), afin de modifier la distance entre les centres desdits bras télescopiques (6 ; 106), ledit dispositif de chargement et de déchargement (1 ; 100 ; 100a, 100b ; 100c) comprenant en outre au moins une barre télescopique (9), ***caractérisé en ce que*** lesdits bras télescopiques sont aptes à s'engager dans des extrémités de ladite au moins une barre télescopique (9) et à saisir lesdites extrémités de ladite au moins une barre télescopique (9).

2. Dispositif (1 ; 100 ; 100a ; 100b ; 100c) selon la revendication 1, dans lequel ladite au moins une barre télescopique (9) comprend une pluralité de barres télescopiques (9) ayant des longueurs qui sont différentes les unes des autres.

3. Dispositif (1 ; 100 ; 100a ; 100b ; 100c) selon la revendication 1 ou 2, comprenant en outre au moins une étagère mobile (4, 4') associée à ladite étagère fixe (2), ladite au moins une étagère mobile (4, 4') étant mobile entre une position sortie dans laquelle elle est sensiblement alignée sur ladite étagère fixe (2) et une position rétractée dans laquelle elle est sous ladite étagère fixe (2).

4. Dispositif (1 ; 100 ; 100a ; 100b ; 100c) selon la revendication 3, dans lequel ladite au moins une étagère mobile (4, 4') comprend une première étagère mobile (4) et une deuxième étagère mobile (4') placées sur des côtés opposés par rapport à ladite étagère fixe (2).

5. Dispositif (1 ; 100 ; 100a ; 100b ; 100c) selon l'une quelconque des revendications précédentes, dans lequel lesdits bras télescopiques (6 ; 106) sont extensibles dans des directions opposées.

6. Dispositif (1 ; 100 ; 100a ; 100b ; 100c) selon l'une quelconque des revendications précédentes, dans lequel lesdits bras télescopiques (6 ; 106) sont mobiles le long d'au moins un élément de barre (7) parallèle à ladite étagère fixe (2).

7. Dispositif (1 ; 100 ; 100a ; 100b ; 100c) selon la revendication 6, dans lequel ledit au moins un élément de barre (7) comprend deux éléments de barre (7), chacun associé avec l'un desdits bras télescopiques (6 ; 106).

8. Dispositif (1 ; 100 ; 100a ; 100b ; 100c) selon l'une quelconque des revendications précédentes, comprenant en outre au moins un élément de support (8, 8') apte à supporter au moins l'une desdites barres télescopiques (9).

9. Dispositif (1 ; 100 ; 100a ; 100b ; 100c) selon la revendication 8, dans lequel ledit au moins un élément de support (8, 8') est mobile dans une direction essentiellement perpendiculaire à ladite étagère fixe (2).

10. Dispositif (1 ; 100 ; 100a ; 100b ; 100c) selon la revendication 8 ou 9, dans lequel ledit au moins un élément de support (8, 8') comprend un premier élément de support (8) et un deuxième élément de support (8') placés sur des côtés opposés par rapport à ladite étagère fixe (2).

11. Dispositif (1 ; 100 ; 100a ; 100b ; 100c) selon l'une quelconque des revendications précédentes en combinaison avec la revendication 3, comprenant en outre des premiers moyens d'entraînement (10, 10') aptes à entraîner ladite au moins une étagère mobile (4, 4').

12. Dispositif (1 ; 100 ; 100a ; 100b ; 100c) selon la revendication 11, dans lequel lesdits premiers moyens d'entraînement (10, 10') sont aptes à entraîner ledit au moins un élément de support (8, 8').

13. Dispositif (1 ; 100 ; 100a ; 100b ; 100c) selon l'une des revendications 6 à 12, comprenant en outre des deuxièmes moyens d'entraînement (11, 11') aptes à entraîner lesdits bras télescopiques (6 ; 106) afin de modifier la distance entre les centres desdits bras télescopiques (6 ; 106) et la longueur desdits bras télescopiques (6 ; 106).

14. Dispositif (1 ; 100 ; 100a ; 100b ; 100c) selon la revendication 13, dans lequel lesdits deuxièmes moyens d'entraînement comprennent au moins un premier moteur (11) pour modifier la distance entre les centres desdits bras télescopiques (6 ; 106) et au moins un deuxième moteur (11') pour modifier la longueur desdits bras télescopiques (6 ; 106).

15. Dispositif (1 ; 100 ; 100a ; 100b ; 100c) selon la revendication 14, lorsqu'elle est dépendante de l'une des revendications 7 à 13, dans lequel ledit au moins un premier moteur (11) comprend une paire de moteurs, chacun de ceux-ci étant destiné à déplacer l'un desdits bras télescopiques (6 ; 106) le long de l'un desdits deux éléments de barre (7), indépendamment de l'autre bras télescopique (6 ; 106).

16. Dispositif (100 ; 100a ; 100b ; 100c) selon l'une quelconque des revendications précédentes, dans lequel chacun desdits bras télescopiques (106) est associé à un dispositif de levage respectif (203).

17. Dispositif (100 ; 100a) selon l'une quelconque des revendications précédentes, dans lequel lesdits bras télescopiques (106) comprennent trois sections (106a, 106b, 106c) qui peuvent coulisser en relation les unes avec les autres.

18. Dispositif (100 ; 100a) selon la revendication 17, dans lequel une troisième section (106c) de chaque bras télescopique (106) est pourvue d'un élément de support (200) sur lequel est articulé un bras rotatif respectif (201), qui est entraîné en rotation autour dudit support (200) par un moteur (202) respectif à engrenages.
